# EUROPÄISCHE PATENTSCHRIFT

(11) **EP 0 795 467 B1**
(45) Veröffentlichungstag und Bekanntmachung des Hinweises auf die Patenterteilung: **06.06.2001**
(21) Anmeldenummer: 97103812.0
(22) Anmeldetag: 07.03.1997
(51) Int. Cl.: B64B 1/58, B64C 31/036, B64D 1/02, B64D 17/02, B64G 1/62

(54) **Landeverfahren für Nutzlasten aus Luft- und Raumfahrtmissionen**
Landing method for payloads from air or space missions
Procédé d'atterrissage pour charges provenant de missions aériennes ou spatiales

(30) Priorität: 16.03.1996 DE 19610370
(43) Veröffentlichungstag der Anmeldung: 17.09.1997
(73) Patentinhaber: Astrium GmbH, 81663 München (DE)
(72) Erfinder: Euskirchen, Jürgen, Ing., 86579 Waidhofen (DE); Starke, Jürgen, Dipl.-Ing., 85529 Riemerling (DE); Keerl, Peter Nikolaus, Dipl.-Ing., 85667 Oberpframmern (DE); Ovadya, Silvio Yasar, Ing., 82024 Taufkirchen (DE); Behr, Roland, Ing., 82061 Neuried (DE)
(74) Vertreter: Hummel, Adam

(56) Entgegenhaltungen:
- EP-A- 0 256 952
- WO-A-86/02902
- US-A- 3 998 408

## Beschreibung

Die Erfindung betrifft ein Landeverfahren für Nutzlasten aus Luft- und Raumfahrtmissionen, bei welchem in ausreichender Höhe innerhalb der Atmosphäre ein steuerbarer Gleitflugkörper entfaltet wird, gemäß dem Oberbegriff des Patentanspruches 1.

Wie beispielsweise die US-PS 4,601,443 zeigt, ist es bekannt, Lasten verschiedenster Art mit gleitschirmartigen Gleitflugkörpern zu kombinieren und je nach Bedarf auch mit Antrieben zu versehen, d.h. eigenstartfähig zu machen. Antriebslose Einheiten eignen sich verständlicherweise nur für gesteuerte Landemanöver. Die nicht optimalen, aerodynamischen Eigenschaften von Gleitschirmen, insbesondere der relativ steile Gleitwinkel, können dabei zu harten Landungen mit hohen Belastungen für Mensch und/oder Material führen. Vorteilhaft ist zugegebenermaßen die gute Zielgenauigkeit solcher steuerbarer Einheiten.

Aus der DE-OS 30 02 828 sind Aerostate, d.h. Auftriebskörper, mit aerodynamischer Form bekannt, welche im Steigen und Sinken infolge eines Anstellwinkels auch eine horizontale Bewegungskomponente erzielen. Die Bewegungen solcher profilierter Aerostate sind gemächlicher und "sanfter" als die von Gleitschirmen, so daß auch weichere Landungen erzielbar sind. Es ist jedoch zu bedenken, daß auch bei derartigen aerodynamisch-aerostatischen Landeeinheiten gewisse Mindestflug- und somit Sinkgeschwindigkeiten erforderlich sind, um z.B. bei mäßigen Gegenwinden noch zielsicher landen zu können. Von daher können empfindliche Lasten auch bei diesem Landeverfahren Beschädigungen erleiden, da harte Bodenberührungen nicht auszuschließen sind.

Aus der DE-OS 25 30 210 ist ein Freiflügel mit Tragflächenform zum Anhängen von Lasten bekannt. Dessen flexible Hülle ist größtenteils mit einem Leichtgas gefüllt, welches die Hülle stabilisiert und ihr aerostatischen Auftrieb verleiht. Weiterhin weist die Hülle Eintrittsöffnungen und Kammern für Stauluft auf, wodurch im Flug eine zusätzliche Stabilisierung erreicht werden soll. Hinsichtlich der Flug-und Landeeigenschaften gilt hier das Gleiche wie bei der vorher zitierten Schrift.

Angesichts dieser bekannten Lösungen und ihrer Nachteile besteht die Aufgabe der Erfindung darin, ein Landeverfahren für Nutzlasten aus Luft- und Raumfahrtmissionen anzugeben, welches bei hoher Zielgenauigkeit, vertretbarer Flugdauer und großer Zuverlässigkeit eine extrem schonende Rückführung von Nutzlasten mit physikalisch empfindlichen Elementen ermöglicht.

Diese Aufgabe wird durch die im kennzeichnenden Teil des Hauptanspruches genannten Merkmale gelöst, in Verbindung mit den gattungsbildenden Merkmalen in dessen Oberbegriff.

Das erfindungsgemäße Verfahren benutzt also einen entfaltbaren, aerodynamisch und aerostatisch wirksamen Gleitflugkörper, dessen Auftrieb und Flugeigenschaften der Landeeinheit einen belastungsarmen, gesteuerten und zielgenauen Sinkflug ermöglichen. Weiterhin wird die Nutzlast räumlich aufgeteilt in einen Körper mit den empfindlichen und einen Körper mit den belastbaren Elementen. Der Körper mit dem belastbaren Anteil wird in Abstand unterhalb des Körpers mit dem empfindlichen Anteil aufgehängt, so daß ersterer bei der Landung den Boden zuerst berührt. Die dadurch eintretende Gewichtsentlastung ermöglicht es dem nunmehr nur noch aerostatisch wirkenden Gleitflugkörper, den Körper mit den empfindlichen Elementen in der Schwebe zu halten, so daß dieser - zumindest anfänglich - keine Bodenberührung hat. Er kann dann im schwebenden Zustand geborgen oder vorsichtig zu Boden gelassen werden, z.B. durch Ablassen des Auftriebsgases aus dem Gleitflugkörper. So werden trotz des anfänglich "normalen" Landungsverlaufes mit Gleitflug und Bodenberührung die empfindlichen Elemente bestmöglich geschont. Solche Elemente können beispielsweise Versuchsanordnungen für Experimente in der Schwerelosigkeit, Meßgeräte verschiedener Art, Proben wie z.B. Wolkenwasserproben, Lebewesen einschließlich Menschen usw. sein.

Die Unteransprüche 2 bis 4 enthalten bevorzugte Ausgestaltungen des Landeverfahrens nach dem Hauptanspruch.

Die Erfindung wird anschließend anhand der Zeichnungen noch näher erläutert. Dabei zeigen in vereinfachter Darstellung:
- Fig. 1: eine Nutzlast im Moment des Wiedereintritts in die Erdatmosphäre,
- Fig. 2: die selbe Nutzlast nach Öffnen eines Hilfsfallschirmes,
- Fig. 3: die Nutzlast zu Beginn der Entfaltung eines Gleitflugkörpers,
- Fig. 4: die komplette Landeeinheit mit zweigeteilter Nutzlast im Gleitflug,
- Fig. 5: die Landeeinheit nach Bodenberührung.

Im dargestellten Beispiel wird eine Nutzlast 1 im Rahmen einer Raumfahrtmission aus dem Weltraum zur Erdoberfläche zurückgeführt und geborgen.

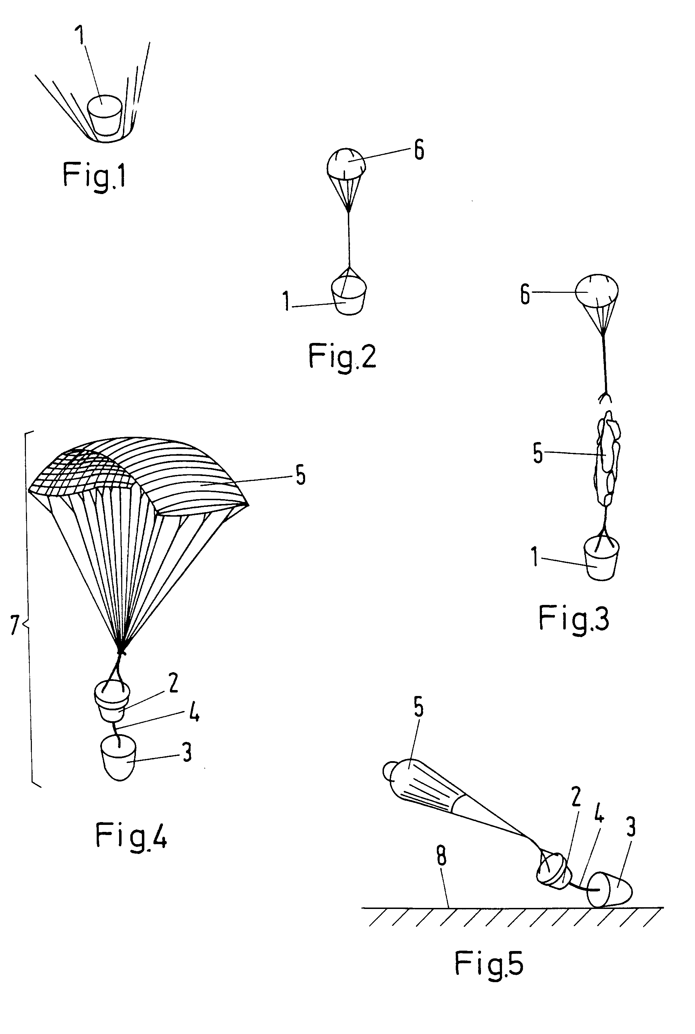

Fig. 1 zeigt den Moment des Wiedereintritts in die Erdatmosphäre, wobei die hohe thermische Belastung der Nutzlast 1 grafisch durch "Hitzestrahlen" angedeutet ist.

Fig. 2 gibt einen Zeitpunkt wieder, in welchem sich ein Hilfsfallschirm 6 geöffnet hat, welcher dazu dient, die Entfaltung eines Gleitflugkörpers 5 einzuleiten.

Fig. 3 zeigt den Beginn dieses Entfaltungsvorganges, wobei auch zu erkennen ist, daß der Hilfsfallschirm 6 nach Erfüllung seines Zweckes bereits wieder abgestoßen wird. Der Gleitflugkörper 5 ist nach Art eines Gleitschirmes ausgeführt, dessen Kammern jedoch zum Teil oder sämtlich nicht - wie üblich - durch Staulauft aufgeblasen und stabilisiert werden sondern mit einem Leichtgas gefüllt werden, wodurch der Gleitflugkörper 5 auch Aerostat-Eigenschaften erhält. Der aerostatische Auftrieb muß kleiner sein als das Gewicht der gesamten Landeeinheit 7, um einen Sinkflug zu ermöglichen. Als Leichtgas wird bevorzugt Helium verwendet, welches im kryogenen Zustand gespeichert ist und durch Wärmezufuhr verdampft wird. Es ist energetisch günstig, für diesen Zweck Wärme zu verwenden, welche als Reibungswärme beim Wiedereintritt anfällt und in geeigneter Form gespeichert wird. Man kann das Leichtgas auch unter hohem Druck speichern, so daß es für den Entfaltvorgang nur entspannt werden muß, wobei keine Wärmezufuhr erforderlich ist. Kombinationen beider Möglichkeiten sind ebenfalls vorstellbar.

Fig. 4 zeigt die komplette Landeeinheit 7 im Gleitflug, wobei die Steuerung durch Anstellwinkel- bzw. Profiländerungen des Gleitflugkörpers 5 in Teilbereichen seiner Spannweite erfolgt.

Die Nutzlast 1 ist bereits in zwei Körper 2 und 3 aufgeteilt, welche über ein Zugelement 4, z.B. in Form von stoßdämpfenden, spiralgeflochtenen KevlarLeinen, verbunden sind. Der Körper 3 mit den physikalisch belastbaren Nutzlast-Elementen ist unten, d.h. erdbodenzugewandt, angeordnet und für Bodenberührung bei der Landung ausgelegt.

Der Körper 2 mit den empfindlichen Nutzlast-Elementen soll demgegenüber bei der Landung und zumindest eine gewisse Zeit danach den Boden nicht berühren sondern aerostatisch in der Schwebe gehalten werden.

Fig. 5 gibt diesen Zustand nach der Landung wieder, wobei die Schräglage der in der Luft gehaltenen Teile auf Windeinflüsse hinweisen soll. In dieser Endphase ist es günstig, wenn der Gleitflugkörper 5 wenig Luftwiderstand bietet, was durch ein begrenztes, bevorzugt automatisches Zusammenfalten/-raffen erreichbar ist. Dabei soll sein aerostatischer Auftrieb aber - zumindest zeitlich begrenzt - noch so groß sein, daß der Körper 2 sicher in der Schwebe gehalten wird. Nach diesem Kriterium ist das nötige Rest-Auftriebsvolumen der zusammengerafften Hülle des - vormaligen - Gleitflugkörpers 5 zu ermitteln.

Der Körper 2 mit empfindlichem Inhalt kann in schwebendem Zustand oder nach vorsichtigem Absenken auf den Boden, bevorzugt durch langsames Ablassen des Rest-Auftriebsgases aus der Hülle, geborgen werden.

Für aus Luftfahrtmissionen rückzuführende Nutzlasten, welche die Erdatmosphäre nicht verlassen, gelten die Fig. 2 bis 5 entsprechend. Natürlich steht dann keine "Wiedereintrittswärme" zur Verdampfung von verflüssigtem Auftriebsgas zur Verfügung.

## Patentansprüche

1. Landeverfahren für Nutzlasten aus Luft- und Raumfahrtmissionen, bei welchem in ausreichender Höhe innerhalb der Atmosphäre ein steuerbarer Gleitflugkörper entfaltet, und die Nutzlast von diesem getragen zielgenau zur Erdoberfläche zurückgeführt wird, wobei die Nutzlast physikalisch empfindliche und physikalisch belastbare Elemente umfaßt, **dadurch gekennzeichnet**,
daß der Gleitflugkörper (5) bei seiner Entfaltung zumindest teilweise mit einem Gas- oder Gasgemisch mit in Relation zur umgebenden Atmosphäre geringerer Dichte gefüllt wird, wobei der aerostatische Auftrieb auf einen Wert gebracht wird, welcher kleiner als das Gewicht der gesamten Landeeinheit (7) ist,
daß die Nutzlast (1) in der Atmosphäre in einen Körper (2) mit den empfindlichen und einen Körper (3) mit den belastbaren Elementen aufgeteilt wird,
daß der Körper (3) mit den belastbaren Elementen an mindestens einem Zugelement (4) in Abstand unterhalb des Körpers (2) mit den empfindlichen Elementen aufgehängt wird, und
daß der Körper (2) mit den empfindlichen Elementen nach Bodenberührung des Körpers (3) mit den belastbaren Elementen zumindest gewisse Zeit aerostatisch in der Schwebe gehalten wird.
2. Landeverfahren nach Anspruch 1, **dadurch gekennzeichnet,** daß die aerostatische Gasfüllung des Gleitflugkörpers (5) durch Erwärmen eines Gases oder Gasgemisches und/oder durch Verdampfen einer kryogenen Flüssigkeit, vorzugsweise von flüssigem Helium, erzeugt wird.
3. Landeverfahren nach Anspruch 2 für Nutzlasten aus Raumfahrtmissionen mit Wiedereintritt in die Erdatmosphäre, **dadurch gekennzeichnet**, daß für den Erwärmungs- und/oder Verdampfungsvorgang ein in geeigneter Weise gespeicherter Teil der beim Wiedereintritt erzeugten Reibungswärme verwendet wird.
4. Landeverfahren nach einem oder mehreren der Ansprüche 1 bis 3, **dadurch gekennzeichnet,** daß mindestens ein Hilfsfallschirm (6) in vorbestimmter Höhe den Entfaltvorgang des Gleitflugkörpers (5) einleitet und danach in die Landeeinheit (7) integriert oder abgestoßen wird.

## Claims

1. Landing procedure for payloads of air- and space travel missions, in which a controllable gliding body is unfolded at a suitable height in the atmosphere, and the payload carried by it is conveyed accurately back to the surface of the earth, the payload including physically sensitive and physically load-bearing elements, characterised in that
- during its unfolding the gliding body (5) is at least partially filled with a gas or gas mixture having a density that is lower in relation to the surrounding atmosphere, the aerostatic buoyancy being brought to a value that is smaller than the weight of the complete landing unit (7),
- the payload (1) in the atmosphere is divided into a body (2) with the sensitive elements and a body (3) with the load-bearing elements.
- the body (3) with the load-bearing elements is suspended on at least one tensile element (4) at a distance below the body (2) with the sensitive elements, and
- the body (2) with the sensitive elements is held aerostatically suspended at least for a certain time after the body (3) with the load-bearing elements touches the ground.

2. Landing procedure according to claim 1, characterised in that the aerostatic gas filling of the gliding body is produced by heating a gas or gas mixture and/or by vaporising a cryogenic liquid, preferably liquid helium.

3. Landing procedure according to claim 2 for payloads of space travel missions with re-entry into the atmosphere of the earth, characterised in that a suitably stored part of the frictional heat generated during re-entry is used for the heating and/or vaporising procedure.

4. Landing procedure according to one or more of claims 1 to 3, characterised in that at least one auxiliary parachute (6) initiates the unfolding procedure of the gliding body (5) at a pre-determined height and is then integrated into the landing unit (7) or ejected.

## Revendications

1. Procédé d'atterrissage pour des charges utiles provenant de missions aériennes ou spatiales, dans lequel on déploie à une hauteur suffisante dans l'atmosphère un corps de vol plané pouvant être commandé et dans lequel on ramène la charge utile portée par celui-ci précisément sur une cible de la surface terrestre, la charge utile comprenant des éléments physiquement fragiles et des éléments physiquement résistants, caractérisé en ce que
on remplit le corps de vol plané (5) lors de son déploiement au moins partiellement d'un gaz ou d'un mélange de gaz ayant une densité inférieure à celle de l'atmosphères environnante, la sustentation aérostatique étant amenée à une valeur qui est inférieure au poids de toute l'unité d'atterrissage (7),
on divise la charge utile (1) dans l'atmosphère en un corps (2) contenant les éléments fragiles et un corps (3) contenant les éléments résistants,
on accroche le corps (3) contenant les éléments résistants à au moins un élément de traction (4) à une certaine distance en dessous du corps (2) contenant les éléments fragiles, et
on maintient en suspens de façon aérostatique le corps (2) contenant les éléments fragiles au moins un certain temps après que le corps (3) contenant les éléments résistants a touché le sol.

2. Procédé d'atterrissage selon la revendication 1, caractérisé en ce qu'on produit le remplissage de gaz aérostatique du corps de vol plané (5) en chauffant un gaz ou un mélange de gaz et/ou en faisant s'évaporer un liquide cryogénique, de préférence de l'hélium liquide.

3. Procédé d'atterrissage selon la revendication 2 pour des charges utiles provenant de missions spatiales avec rentrée dans l'atmosphère terrestre, caractérisé en ce qu'on utilise pour l'opération de chauffage et/ou d'évaporation une partie, stockée de manière appropriée, de la chaleur de friction produite lors de la rentrée dans l'atmosphère.

4. Procédé d'atterrissage selon une ou plusieurs des revendications 1 à 3, caractérisé en ce qu'au moins un parachute auxiliaire (6) déclenche à une hauteur prédéterminés l'opération de déploiement du corps de vol plané (5) et est ensuite intégré dans l'unité d'atterrissage (7) ou rejeté.
